Europäisches Patentamt

**European Patent Office**

Office européen des brevets

(11) Veröffentlichungsnummer : **0 081 728**
**B1**

(12) **EUROPÄISCHE PATENTSCHRIFT**

(45) Veröffentlichungstag der Patentschrift :
**16.06.87**

(51) Int. Cl.⁴ : **B 60 B 21/12,** B 60 C 15/02,
B 60 C 7/24

(21) Anmeldenummer : **82110968.3**

(22) Anmeldetag : **27.11.82**

(54) Lösbare Befestigung eines pannensicheren Reifens.

(30) Priorität : **11.12.81 DE 3149114**

(43) Veröffentlichungstag der Anmeldung :
**22.06.83 Patentblatt 83/25**

(45) Bekanntmachung des Hinweises auf die Patenterteilung : **16.06.87 Patentblatt 87/25**

(84) Benannte Vertragsstaaten :
**BE DE NL SE**

(56) Entgegenhaltungen :
**FR-A- 525 974**
**FR-A- 624 232**
**US-A- 1 525 088**

(73) Patentinhaber : **BAYER AG**
**Konzernverwaltung RP Patentabteilung**
**D-5090 Leverkusen 1 Bayerwerk (DE)**

(72) Erfinder : **Ippen, Jakob, Dr.**
**Schleiermacherstrasse 17**
**D-5090 Leverkusen (DE)**
Erfinder : **Stüttgen, Friedel**
**Albrecht-Dürer-Strasse 94**
**D-5024 Pulheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine lösbare Befestigung eines Fahrzeugreifens mit Gummifederung, bestehend aus einer über einem Keilverschluß arbeitenden Feststellvorrichtung, welche den Reifen an der Felge fixiert.

Bekannt ist ein pneumatischer Reifen, dessen Reifenfüße durch den Überdruck im Reifeninneren am Felgenhorn unter gleichzeitiger Abdichtung festgehalten werden.

Entweicht die Luft z. B. bei einer Verletzung durch einen Nagel, so verliert der Reifen seine Form und ist damit auch nicht mehr auf der Felge exakt geführt. Folglich ist das Fahrzeug verkehrsuntüchtig, was — beispielsweise bei Rollstühlen — zu kritischen Situationen für den Behinderten führen kann.

Es wurde deshalb ein pannensicherer Reifen entwickelt, der aus einem Gummihohlkörper mit angrenzendem Reifenfuß besteht, bei dem die Halterung des Reifens auf der Felge durch einen nach dem Auflegen in einen Kanal eingespritzten flachen ununterbrochenen Ring aus Kunststoff im Bereich des Reifenfußes erfolgt.

Der Nachteil dieses Reifens ist, daß infolge des komplizierten Einspritzvorganges der Ring nur in der Fabrik ordnungsgemäß eingebaut werden kann, wodurch die allgemeine Einsatzmöglichkeit — beispielsweise beim Fahrrad — stark eingeschränkt wird, zumal die Demontage dieses Reifens kaum ohne Zerstörung von Teilen möglich ist.

Weiter ist in der FR-A 525 974 eine Reifendecke mit einem innen abstützenden, elastischen Federkörper bekannt, deren Reifenwülste über entlang des Felgenbettes angeordnete Feststellvorrichtungen fixiert sind. Die Feststellvorrichtung besteht wiederum aus jeweils zwei parallel zum Felgenumfang verlaufenden Segmenten mit Schrägen an den sich gegenüberliegenden Seitenflächen, auf denen ein Keil sitzt, der mittels einer radialen Bewegung über eine sich gegen das Felgenbett abstützende Schraube eine Verschiebung der Segmente in axialer Richtung und damit Fixierung der Reifenwülste unter den Felgenhörnern bewirken kann.

Die mehrteilige Vorrichtung ist aufwendig in der Herstellung und in der Montage. Durch das große Gewicht der Konstruktion wird der Fahrkomfort reduziert. Die Fixirung der einzelnen Reifenwülste einer Reifendecke stellt hohe Ansprüche an die Einklemmung.

Der Erfindung liegt die Aufgabe zugrunde, einen leichtläufigen, pannensicheren Fahrzeugreifen mit Gummifederung für Fahrzeuge mit niedrigen Geschwindigkeiten zu finden, der für jedermann problemlos mit einfachem Werkzeug auf eine ungeteilte Felge montierbar sowie demontierbar ist und der trotz hoher Beanspruchung bei Wendebewegungen auf der Stelle (Kranken-Fahrstühle) sicher auf dem Rad gehalten wird.

Die Aufgabe wurde erfindungsgemäß dadurch gelöst, daß der Fahrzeugreifen aus einem umlaufenden, allseitig von Gummi umgebenen Hohlraum mit zwei anschließenden, in Richtung der Felge vorstehenden Reifenfüßen besteht, dessen gegenüberliegende, schwalbenschwanzförmig ausgebildete Seitenflächen direkt über ein radial verschiebbares Segment mit trapezförmigem Querschnitt als Feststellvorrichtung fixiert werden.

Durch die Feststellvorrichtung ist es möglich, wie bei einem pneumatischen Reifen, den Reifenfuß seitlich so an das Felgenhorn zu drücken, daß bei den vorkommenden Geschwindigkeiten von Fahrrad und Rollstuhl ein einwandfreier Felgensitz des gummigefederten Fahrzeugreifens gewährleistet ist. Da es sich um eine mechanische Feststellvorrichtung handelt, die jederzeit von außen zugängig ist, kann auch der Laie einen Reifen montieren und demontieren, wodurch eine Fahrbereitschaft leicht aufrechterhalten werden kann.

Durch die Abstandshalter, die beispielsweise als Schrauben ausgebildet sein können, drückt der zur Nabe hin konisch ausgebildete Körper durch Verschieben der Reifenfüße in Richtung der Felge über die entsprechend geneigten Seitenflächen diese sicher gegen die Felgenhörner, wodurch bei einem Hinterschnitt eine exakte Fixierung in radialer und axialer Richtung gewährleistet ist. Es sind keine Verstärkungen, wie Reifencord, Drahtkerne usw. nötig, so daß sich besonders der Einsatz eines extrudierten Reifenprofils, was wirtschaftlich sehr günstig herzustellen ist, hier anbietet. Weiter ist bei den einfachen Teilen eine Montage auch für den Laien ohne Schwierigkeit ausführbar.

In einer anderen Ausführungsform besteht die Feststellvorrichtung aus zwei bis sechs — vorzugsweise vier — entlang eines Kreisbogens verlaufenden Segmenten aus Kunststoff.

Die Segmente, wenn sie nahezu aneinanderstoßen, ermöglichen einen gleichmäßigen Festsitz des Fahrzeugreifens entlang der Felge, was besonders bei Reifen mit geringer Steifigkeit vorteilhaft ist.

Die Reifen der Erfindung können aus jedem beliebigen Natur- oder Synthesekautschuk hergestellt werden, dessen Vulkanisatwerte eine Shore-A-Härte von 45-80 und einen Spannungswert von 3 bis 9 MPa bei 300 % Dehnung aufweisen. Besonders geeignet sind Naturkautschuk, Styrolbutadienkautschuk, Polybutadien- und Ethylen-propylen-tepolymerisat-Kautschuk. Das Gewicht des Reifens ist dem des Normalreifens vergleichbar.

Verschiedene Ausführungsformen des erfindungsgemäßen Fahrzeugreifens sind in den Zeichnungen dargestellt und werden im folgenden näher beschrieben. Es zeigen

Figur 1 Querschnitt durch Feststellvorrichtung mit Zugschrauben,

Figur 2 Längsschnitt eines Fahrzeugreifens mit 4 Segmenten,

Figur 3 Querschnitt durch Feststellvorrichtung mit Druckschrauben.

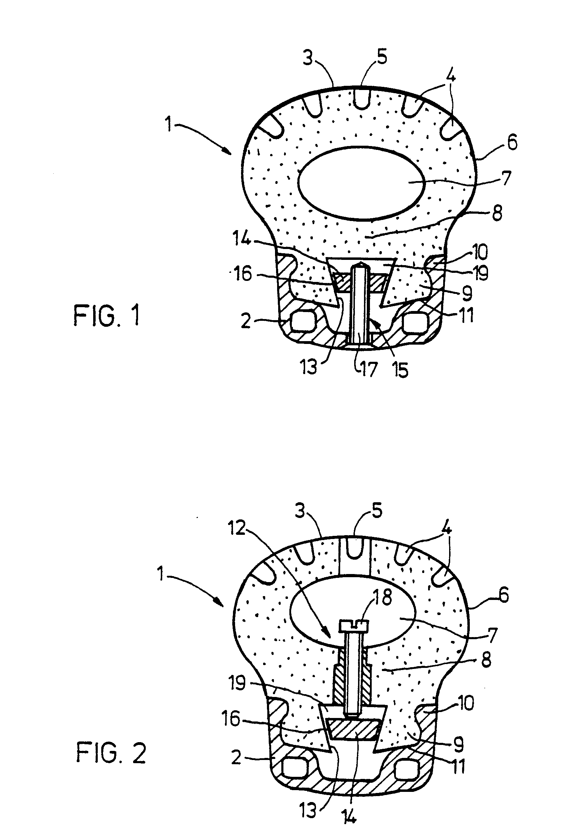

In Fig. 1 und 2 ist ein extrudierter Fahrzeugreifen 1 auf einer Felge 2 im Querschnitt dargestellt. Die Lauffläche 3 mit entsprechenden Profileinschnitten 4 geht vom Zenith 5 unter stetiger Verjüngung in die Seitenwand 6 über, um sich dann zur Bildung eines Hohlraumes 7 mit der gegenüberliegenden Seitenwand 6 durch eine Wandung 8 zu verbinden. Anschließend sind zwei Reifenfüße 9 ausgebildet, die außen das vorspringende Felgenhorn 10 umgreifen und unten durch das Felgenbett 11 gestützt werden. Die eigentliche Feststellvorrichtung 12 besteht aus schwalbenschwanzförmig ausgebildeten Seitenflächen 13, zwischen denen vier kreisringförmige Segmente 14 mit trapezförmigem Querschnitt angeordnet sind, die durch Drehen des als Schraube ausgebildeten Abstandshalters 15 die Reifenfüße 9 infolge der Keilwirkung über die Seitenflächen 16 gegen die Felgenhörner 10 drücken, wobei zur Verschiebung des Segmentes 14 eine Zugschraube 17 von innen bzw. eine Druckschraube 18 von außen vorgesehen ist.

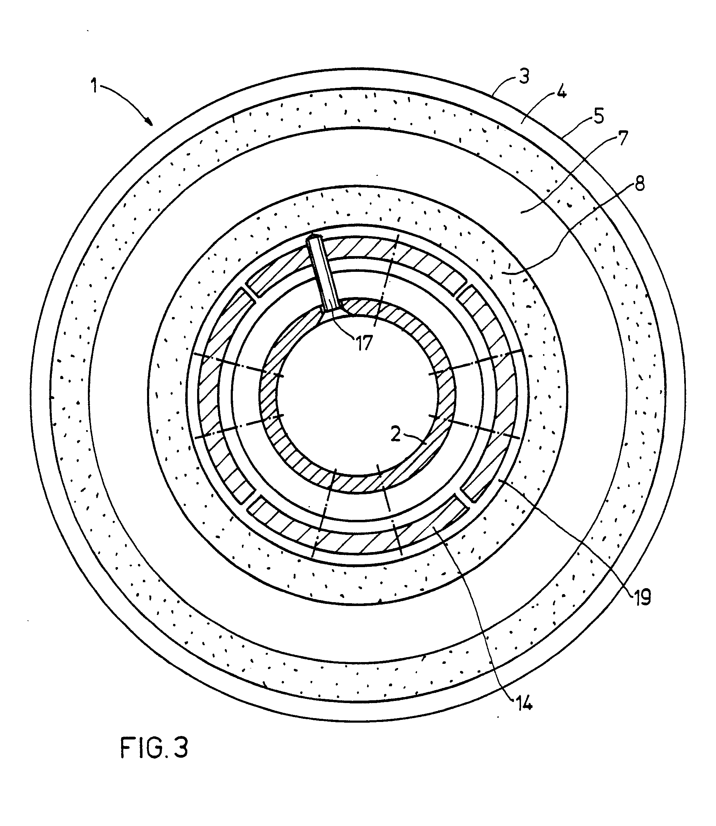

In Fig. 3 ist ein Schnitt durch Fig. 1 gezeigt, bei dem von außen nach innen folgende Teile dargestellt sind

    5 Zenith
    4 Profileinschnitte
    3 Lauffläche
    7 Hohlraum
    8 Wandung
  19 Freiraum
  14 Segment
    2 Felge
  17 (Zug) schraube.

## Patentansprüche

1. Lösbare Befestigung eines Fahrzeugreifens (1) mit Gummifederung, bestehend aus einer über einem Keilverschluß arbeitenden Feststellvorrichtung (2), welche den Reifen (1) an der Felge fixiert, dadurch gekennzeichnet, daß der Fahrzeugreifen (1) aus einem umlaufenden, allseitig von Gummi umgebenen Hohlraum (7) mit zwei anschließenden, in Richtung der Felge vorstehenden Reifenfüßen besteht, dessen gegenüberliegende, schwalbenschwanzförmig ausgebildete Seitenflächen (13) direkt über ein radial verschiebbares Segment (14) mit trapezförmigem Querschnitt als Feststellvorrichtung (12) fixiert werden.

2. Lösbare Befestigung eines Fahrzeugreifens, dadurch gekennzeichnet, daß die Feststellvorrichtung (12) aus zwei bis sechs entlang eines Kreisbogens verlaufenden Segmenten (14) aus Kunststell besteht.

## Claims

1. Detachable fastening of a vehicle tyre (1) with rubber springing, consisting of a fixing device (2) which operates via a wedge lock and fixes the tyre (1) to the rim, characterised in that the vehicle tyre (1) consists of an encircling cavity (7) which is surrounded on all sides by rubber and has two adjoining tyre feet projecting towards the rim, the opposing dovetailed lateral surfaces (13) of which are fixed directly via a radially displaceable segment (14) with a trapezoidal cross-section as the fixing device (12).

2. Detachable fastening of a vehicle tyre, characterised in that the fixing device (12) consists of two to six plastic segments (14) which extend along a circular arc.

## Revendications

1. Fixation amovible d'un pneu de véhicule (1) offrant la souplesse du caoutchouc, consistant en un dispositif de fixation (2) opérant par l'intermédiaire d'une fermeture à coin qui fixe le pneu (1) sur la jante, caractérisée en ce que le pneu de véhicule (1) consiste en un espace creux circulaire (7) entouré de tous les côtés par du caoutchouc en association avec deux talons de pneu en saillie dans la direction de la jante, dont les faces latérales (13) opposées constituées en forme de queue d'aronde sont fixées directement au moyen d'un segment (14) décalable radialement et à section transversale trapézoïdale, en tant que dispositif de fixation (12).

2. Fixation amovible d'un pneu de véhicule, caractérisée en ce que le dispositif de fixation (12) consiste en deux à six segments (14) de matière plastique disposés suivant un arc de cercle.

FIG. 1

FIG. 2

FIG.3